# EUROPÄISCHE PATENTANMELDUNG

(11) **EP 2 511 551 A2**
(43) Veröffentlichungstag der Anmeldung: **17.10.2012**
(21) Anmeldenummer: 12164220.1
(22) Anmeldetag: 16.04.2012
(51) Int. Cl.: F16C 33/60, F16C 33/78

(54) **Wälzlager**

(30) Priorität: 15.04.2011 DE 102011007476
(71) Anmelder: Aktiebolaget SKF, 41 550 Göteborg (SE)
(72) Erfinder: Hauck, Helmut, 97502 Euerbach (DE); Heege, Thomas, 97422 Schweinfurt (DE); Herbst, Hubert, 97503 Gädheim (DE); Kamm, Sandra, 97469 Gochsheim (DE); Steblau, Dieter, 97074 Würzburg (DE)
(74) Vertreter: Schonecke, Mitja

(57) **Zusammenfassung**

Die Erfindung betrifft ein Wälzlager (1), umfassend mindestens einen Lagerinnenring (2) und mindestens einen Lageraußenring (3), wobei zwischen Lagerinnenring (2) und Lageraußenring (3) eine Anzahl Wälzkörper (4) angeordnet sind, die von einem Käfig (5) gehalten werden, wobei der Käfig (5) zumindest an einer axialen Stirnseite (6) eine Anlauffläche (7) aufweist, wobei am Lagerinnenring (2) oder am Lageraußenring (3) ein Anlageelement (8) angeformt oder angebracht ist, das eine axiale Gegenanlauffläche (9) für die Anlauffläche (7) des Käfigs (5) bildet. Um in fertigungstechnisch einfacher und somit kostengünstiger Weise eine axiale Führung des Wälzkörpersatzes zu ermöglichen, sieht die Erfindung vor, dass das Anlageelement (8) durch einen Trägerring einer Dichtungsanordnung (10) gebildet wird, wobei der Trägerring (8) eine im Radialschnitt U-förmige Gestalt hat, wobei an einem Schenkel der U-förmigen Kontur eine Dichtung (13) angeordnet ist und wobei an dem anderen Schenkel der U-förmigen Kontur die Gegenanlauffläche (9) ausgebildet ist, wobei die Gegenanlauffläche (9) des Anlageelements (8) an ihrer der Anlauffläche (7) des Käfigs (5) zugewandten Seite und/oder die Anlauffläche (7) des Käfigs (5) an ihrer der Gegenanlauffläche (9) zugewandten Seite konvex ausgebildet ist.

## Beschreibung

Die Erfindung betrifft ein Wälzlager, umfassend mindestens einen Lagerinnenring und mindestens einen Lageraußenring, wobei zwischen Lagerinnenring und Lageraußenring eine Anzahl Wälzkörper angeordnet sind, die von einem Käfig gehalten werden, wobei der Käfig zumindest an einer axialen Stirnseite eine Anlauffläche aufweist, wobei am Lagerinnenring oder am Lageraußenring ein Anlageelement angeformt oder angebracht ist, das eine axiale Gegenanlauffläche für die Anlauffläche des Käfigs bildet.

Ein solches gattungsgemäßes Wälzlager ist aus der DE 29 32 290 A1 bekannt. Eine solche Lösung bzw. eine ähnliche Lösung zeigen auch die DE 10 2007 022 316 A1, die DE 20 22 406 A, die DE 19 64 036 U, die DE 18 19 230 U, die DE 10 75 383 A, die US 3 501 210 A und die DE 862 694 B.

Wälzlager dieser Art - insbesondere ausgebildet als Rollenlager - müssen häufig zumindest in gewissem Umfang Axialkräfte übertragen können. Aber auch für die axiale Führung des Rollensatzes werden oft Borde eingesetzt, die am Außen- bzw. Innenring angeformt sind. Die Lageringe haben hierzu einen oder mehrere Laufbahnborde. Die Borde können nur an einem Lagerring oder auch an beiden Ringen angeordnet sein.

Zylinderrollenlager mit entsprechenden Borden sind als Standard bekannt. Sie werden unter der Typbezeichnung bzw. in der Bauweise NU, NJ, NUP oder N hergestellt und weisen Borde für den axialen Anlauf der Zylinderrollen am Lagerinnenring und/oder Lageraußenring auf. Analoges gilt für Nadellager.

Das Vorsehen von Borden an den Lagerringen führt regelmäßig dazu, dass die Rollenlaufbahn radial im Einstich geschliffen werden muss. Dies führt zu entsprechend hohen Fertigungskosten infolge relativ langer Prozesshaupt- und Nebenzeiten.

Fertigungstechnisch günstiger ist eine durchgehende lineare Laufbahn für die Wälzkörper, da in diesem Falle axiales Innenrundschleifen eingesetzt werden kann, um die Laufbahnen zu schleifen.

Es ist daher auch bekannt, durchgehende Laufbahnen vorzusehen, die in der genannten fertigungstechnisch einfacheren Weise geschliffen werden können, wobei zur axialen Führung des Rollensatzes Sprengringe oder Abschlussdeckel vorgesehen werden, die in eine entsprechende Nut im Lagerring eingesetzt werden; die Nut wird bereits bei der Drehbearbeitung des Lagerrings gefertigt und wird beim Schleifen nicht mehr berücksichtigt. Nachteilig ist hier allerdings der zusätzliche Prozess des Nutdrehens für den Sprengring. Ferner ist hier zumeist ein zusätzlicher Entgratprozess erforderlich; auch die Montage ist relativ aufwändig. Außerdem liegt ein nicht optimierter Kontakt aufgrund der Oberflächentopographie der Sprengringe vor, die standardisiert eingesetzt werden; die Kontaktflächen sind daher nicht optimal ausgeführt.

Der Erfindung liegt die Aufgabe zugrunde, ein Wälzlager der eingangs genannten Art so fortzubilden, dass es in noch fertigungstechnisch einfacherer und somit kostengünstigerer Weise möglich ist, für die axiale Führung des Wälzkörpersatzes zu sorgen; dabei soll es bevorzugt zumindest in gewissem Umfang möglich sein, axiale Lagerkräfte zu übertragen. Dabei soll ein besonderes Augenmerk auch auf einer langen Gebrauchsdauer des Lagers liegen; demgemäß wird eine verschleißarme Konstruktion angestrebt.

Die **Lösung** dieser Aufgabe durch die Erfindung ist dadurch gekennzeichnet, dass das Anlageelement durch einen Trägerring einer Dichtungsanordnung gebildet wird, wobei der Trägerring eine im Radialschnitt U-förmige Gestalt hat, wobei an einem Schenkel der U-förmigen Kontur eine Dichtung angeordnet ist und wobei an dem anderen Schenkel der U-förmigen Kontur die Gegenanlauffläche ausgebildet ist, wobei die Gegenanlauffläche des Anlageelements an ihrer der Anlauffläche des Käfigs zugewandten Seite und/oder die Anlauffläche des Käfigs an ihrer der Gegenanlauffläche zugewandten Seite konvex ausgebildet ist.

Der Trägerring kann formschlüssig in einer Ausnehmung, insbesondere in einer Ringnut, im Lagerinnenring oder Lageraußenring angeordnet sein. Bevorzugt ist allerdings, dass der Trägerring kraftschlüssig, insbesondere mittels Presspassung, an einer zylindrischen Fläche des Lagerinnenrings oder des Lageraußenrings angeordnet ist. Der Trägerring ist dann also auf eine zylindrische Sitzfläche aufgepresst. In Frage kommt auch ein stoffschlüssiges Befestigen des Trägerrings, beispielsweise durch Kleben oder durch Löten.

Der Lagerinnenring und/oder der Lageraußenring sind bevorzugt frei von Anlaufborden für die Wälzkörper. Dies gilt zumindest für eine axiale Seite des Lagers.

Die genannte konvexe Gestaltung ist so zu verstehen, dass die Ausformung im Radialschnitt konvex (ballig) ist und ringförmig umläuft.

Die Anlauffläche des Käfigs an ihrer der Gegenanlauffläche zugewandten Seite kann auch konkav ausgebildet sein (d. h. eine im Radialschnitt konkave Form läuft ringförmig um). Hiermit ist ein verbesserter Anlauf möglich. Insbesondere ergibt sich damit die Möglichkeit, ein Schmiermedium in einer konkaven Ausnehmung zu platzieren, um im Betrieb des Lagers Schmiermedium für einen längeren Betriebszeitraum zur Verfügung zu stellen.

Die Gegenanlauffläche des Anlageelements kann gleichermaßen an ihrer der Anlauffläche zugewandten Seite konkav ausgebildet sein; es gilt hier dasselbe, wie es zur konkaven Ausgestaltung der Anlauffläche gesagt wurde.

Die Anlauffläche des Käfigs und/oder die Gegenanlauffläche des Anlageelements können mit einem Material mit geringem Reibungskoeffizienten versehen sein oder der Käfig und/oder das Anlageelement können aus einem solchen Material bestehen. Der Käfig kann hierbei aus einem nichtmetallischen Werkstoff bestehen (z. B. aus Kunststoff mit guter Gleitreibungseigenschaft). Er kann alternativ auch aus Metall bestehen. Vorteilhaft ist auch der Einsatz eines Verbundwerkstoffs als Käfigmaterial.

Das Wälzlager ist bevorzugt als Nadellager oder als Zylinderrollenlager ausgebildet.

Die vorgeschlagene Dichtung stellt eine in das Lager eingebrachte Dichtung, d. h. eine integrierte Dichtung, dar. Bevorzugt wird der Käfig axial durch die Lagerdichtung geführt.

Das vorgeschlagene Lager wird bevorzugt als Loslager eingesetzt, so dass keine relevanten Axialkräfte zu übertragen sind.

Bevorzugt hat der Käfig zu der axial führenden Dichtung eine Relativdrehzahl, die kleiner ist als die der beiden Lagerringe zueinander.

Der Käfig kann an der Kontaktstelle zur Dichtung, d. h. zur Gegenanlauffläche, eine reibungsminimierte Form aufweisen, beispielsweise die genannte ballige (konvexe) Ausgestaltung. Diese Ausformung kann so gewählt sein, dass eine Speicherung von Schmiermedium möglich ist, was im Allgemeinen durch eine im Radialschnitt konkave Ausgestaltung möglich ist. Dasselbe, d. h. die konvexe bzw. konkave Ausgestaltung, gilt auch umgekehrt für die Gegenanlauffläche des Anlageelements, die mit der Anlauffläche des Käfigs Kontakt hat.

Die Dichtung kann eine metallische Kontaktstelle zum Käfig aufweisen. Die Dichtung kann zusätzliche Mittel zur Abdichtung derselben im Lagerringsitz aufweisen, d. h. die Festlegung des Trägerrings der Dichtung (also des Anlageelements) am bzw. im Lagerring kann beispielsweise durch eine Elastomermasse, durch einen Dichtlack oder durch einen Klebstoff erfolgen.

In vorteilhafter Weise sind bei der vorgeschlagenen Lösung die Borde eliminiert, was zunächst Kosten- und Gewichtsvorteile erbringt, da weniger Rohmaterial eingesetzt werden muss. Das Einstichschleifen der Lagerringe kann durch das wesentlich günstigere Durchlaufschleifen ersetzt werden. Auch die zum Schleifen der Borde notwendigen Einstiche können entfallen, was zu einer höheren Ringsteifigkeit, zu breiteren Lagerlaufbahnen und zu längeren einsetzbaren Rollen führt. Demgemäß kann eine höhere Last bei sonst gleichen Außenmaßen erreicht werden.

Verglichen mit der Lösung, bei der Sprengringe zum Einsatz kommen, ist die vorgeschlagene Lösung insoweit vorteilhaft, weil die Sprengringnuten komplett entfallen können, d. h. der hierfür erforderliche zusätzliche Drehprozess kann eingespart werden. Auch die Ringsteifigkeit ist - wegen des Fehlens der Aufnahmenuten für die Sprengringe - größer. Wiederum können breitere Laufbahnen genutzt und längere Rollen eingesetzt werden. Folglich ergibt sich auch hier eine höhere Lastaufnahme bei sonst gleichen Außenmaßen.

Die Erfindung kommt bevorzugt bei Nadellagern zum Einsatz, die als Loslagerung verwendet werden. Eine besonders vorteilhafte Anwendung ist ein Ladedruckerzeuger zur Aufladung von Verbrennungskraftmaschinen, zumeist eingesetzt in PKWs.

Generell ist die Erfindung aber auch vorteilhaft in anderen Anwendungen verwendbar, insbesondere dort, wo Rollenlager benötigt werden, die käfiggeführt und zumindest einseitig gedeckelt bzw. abgedichtet sind.

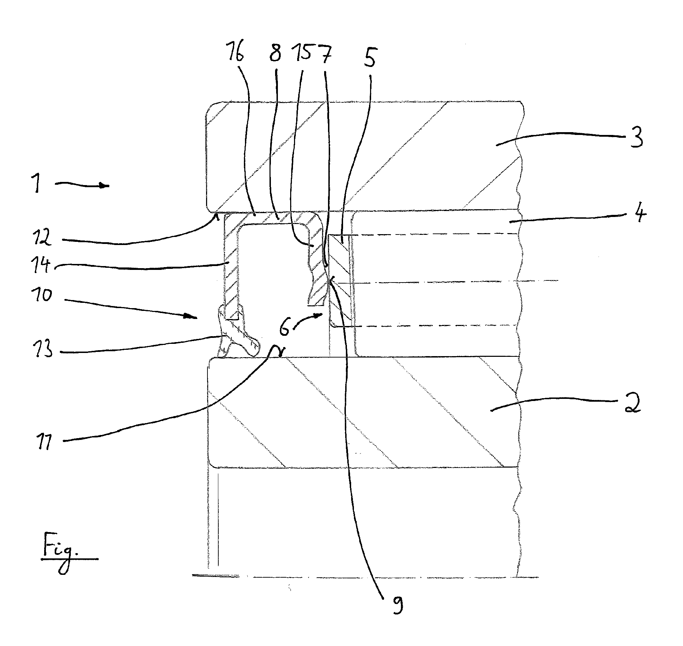

In der Zeichnung ist ein Ausführungsbeispiel der Erfindung dargestellt. Die einzige Figur zeigt einen Radialschnitt durch ein Nadellager, das erfindungsgemäß ausgestaltet ist. Die Rollenführung erfolgt durch einen Käfig.

In der Figur ist ein Wälzlager 1 zu sehen, das als Nadellager ausgeführt ist. Es hat einen Lagerinnenring 2 und einen Lageraußenring 3, zwischen denen Wälzkörper (Nadeln) 4 angeordnet sind. Die Wälzkörper 4 werden durch einen Käfig 5 geführt.

Die eine (linke) axiale Stirnseite 6 des Käfigs 5 ist als Anlauffläche 7 gestaltet, d. h. sie ist zur axialen Anlage an einem Anlageelement ausgebildet.

Als Anlageelement 8 fungiert vorliegend ein Trägerring einer Dichtungsanordnung 10. Die Dichtungsanordnung 10 umfasst den Trägerring 8, der im Radialschnitt - wie zu sehen - U-förmig ausgeführt ist. Der eine Schenkel 14 erstreckt sich radial nach innen und trägt an seinem Ende eine Dichtung 13, die reibend an der zylindrischen Fläche 11 des Innenrings 2 anläuft. Der andere Schenkel 15 erstreckt sich ebenfalls radial nach innen und weist eine durch Umformung ausgebildete leicht ballige Gegenanlauffläche 9 auf, an der die Anlauffläche 7 des Käfigs anlaufen kann.

Der Verbindungsabschnitt 16 des Trägerrings 8, der die beiden Schenkel 14 und 15 verbindet, sitzt mit Presssitz in der zylindrischen Fläche 12 (d. h. in der zylindrischen Bohrung) des Lageraußenrings 3.

Der Käfig 5 weist also an einer axialen Stirnseite 6 eine Anlauffläche 7 auf, wobei am Lageraußenring 3 das Anlageelement 8 angebracht ist; hierdurch wird eine axiale Gegenanlauffläche 9 für die Anlauffläche 7 des Käfigs 5 gebildet.

Das Konzept stellt im Ausführungsbeispiel also auf ein käfiggeführtes und abgedichtetes Rollenlager ab, wobei keine Sprengringnut und keine Borde für den axialen Anlauf der Wälzkörper vorhanden sind. Für die Axialführung der Wälzkörper wird der Käfig genutzt, der axial an einem Anlageelement (Trägerring) einer Dichtungsanordnung anlaufen kann. Dadurch wird erreicht, dass sowohl der Käfig als auch das Anlageelement eine Kontaktfläche haben (d. h. die Anlauffläche und die Gegenanlauffläche), die auch für eine Abstützung unter Rotation ausgelegt sind.

Dargestellt ist eine Anordnung, bei der der Winkel der Achse des Wälzlagers 1 horizontal verläuft. Es ist aber genauso auch möglich, dass der Winkel der Achse des Wälzlagers zur Horizontalen größer Null ist. Auch eine vertikale Ausrichtung der Achse ist möglich.

Das Wälzlager 1 kann des Weiteren mit einer Fettschmierung versehen werden. Demgemäß ist dann in den von der Dichtung 13 abgedichteten Raum eine entsprechende Fettmenge eingebracht.

### Bezugszeichenliste

- 1: Wälzlager
- 2: Lagerinnenring
- 3: Lageraußenring
- 4: Wälzkörper
- 5: Käfig
- 6: axiale Stirnseite des Käfigs
- 7: Anlauffläche
- 8: Anlageelement (Trägerring)
- 9: Gegenanlauffläche
- 10: Dichtungsanordnung
- 11: zylindrische Fläche des Lagerinnenrings
- 12: zylindrische Fläche des Lageraußenrings
- 13: Dichtung
- 14: Schenkel
- 15: Schenkel
- 16: Verbindungsabschnitt

## Patentansprüche

1. Wälzlager (1), umfassend mindestens einen Lagerinnenring (2) und mindestens einen Lageraußenring (3), wobei zwischen Lagerinnenring (2) und Lageraußenring (3) eine Anzahl Wälzkörper (4) angeordnet sind, die von einem Käfig (5) gehalten werden, wobei der Käfig (5) zumindest an einer axialen Stirnseite (6) eine Anlauffläche (7) aufweist, wobei am Lagerinnenring (2) oder am Lageraußenring (3) ein Anlageelement (8) angeformt oder angebracht ist, das eine axiale Gegenanlauffläche (9) für die Anlauffläche (7) des Käfigs (5) bildet,
**dadurch gekennzeichnet,**
**dass** das Anlageelement (8) durch einen Trägerring einer Dichtungsanordnung (10) gebildet wird, wobei der Trägerring (8) eine im Radialschnitt U-förmige Gestalt hat, wobei an einem Schenkel der U-förmigen Kontur eine Dichtung (13) angeordnet ist und wobei an dem anderen Schenkel der U-förmigen Kontur die Gegenanlauffläche (9) ausgebildet ist, wobei die Gegenanlauffläche (9) des Anlageelements (8) an ihrer der Anlauffläche (7) des Käfigs (5) zugewandten Seite und/oder die Anlauffläche (7) des Käfigs (5) an ihrer der Gegenanlauffläche (9) zugewandten Seite konvex ausgebildet ist.

2. Wälzlager nach Anspruch 1, **dadurch gekennzeichnet, dass** der Trägerring (8) formschlüssig in einer Ausnehmung im Lagerinnenring (2) oder Lageraußenring (3) angeordnet ist.

3. Wälzlager nach Anspruch 1, **dadurch gekennzeichnet, dass** der Trägerring (8) kraftschlüssig an einer zylindrischen Fläche (11, 12) des Lagerinnenrings (2) oder des Lageraußenrings (3) angeordnet ist.

4. Wälzlager nach einem der Ansprüche 1 bis 3, **dadurch gekennzeichnet, dass** der Lagerinnenring (2) und/oder der Lageraußenring (3) frei von Anlaufborden für die Wälzkörper (4) sind.

5. Wälzlager nach einem der Ansprüche 1 bis 4, **dadurch gekennzeichnet, dass** die Anlauffläche (7) des Käfigs (5) und/oder die Gegenanlauffläche (9) des Anlageelements (8) mit einem Material mit geringem Reibungskoeffizienten versehen ist oder der Käfig (5) und/oder das Anlageelement (8) aus einem solchen Material besteht.

6. Wälzlager nach einem der Ansprüche 1 bis 5, **dadurch gekennzeichnet, dass** es als Nadellager oder als Zylinderrollenlager ausgebildet ist.
